# EUROPÄISCHE PATENTSCHRIFT

(11) **EP 4 243 595 B1**
(45) Veröffentlichungstag und Bekanntmachung des Hinweises auf die Patenterteilung: **02.09.2026**
(21) Anmeldenummer: 21810549.2
(22) Anmeldetag: 09.11.2021
(51) Int. Cl.: A01D 41/14, A01C 7/00

(54) **SCHNEIDWERK MIT EINER SAATGUTAUSBRINGUNGSVORRICHTUNG**
CUTTING UNIT COMPRISING A DEVICE FOR THE APPLICATION OF SEEDS
UNITÉ DE COUPE COMPRENANT UN DISPOSITIF POUR L'APPLICATION DE SEMENCES

(30) Priorität: 16.11.2020 DE 102020130169; 23.03.2021 DE 202021101503 U; 04.05.2021 DE 202021001628 U
(43) Veröffentlichungstag der Anmeldung: 20.09.2023
(73) Patentinhaber: Stotz Im- und Export GmbH, 24977 Langballig (DE)
(72) Erfinder: STOTZ, Lorenz Peter, 24977 Langballig (DE)
(74) Vertreter: Meitinger, Thomas Heinz
(86) Internationale Anmeldenummer: PCT/EP2021/081089
(87) Internationale Veröffentlichungsnummer: WO 2022/101188

(56) Entgegenhaltungen:
- CN-A- 107 455 047
- MD-Z- 593

## Beschreibung

### GEBIET DER ERFINDUNG

Die vorliegende Erfindung betrifft ein doppelwandiges Schneidwerk einer Erntemaschine, insbesondere eines Mähdreschers, zum Schneiden von Feldfrüchten.

### HINTERGRUND DER ERFINDUNG

Im Stand der Technik sind verschiedene Mähdrescher und zugehörige Arbeitsverfahren bekannt. Der Mähdrescher verrichtet üblicherweise mehrere Arbeitsgänge, die in früheren Zeiten nacheinander und insbesondere händisch durchgeführt wurden. Insbesondere gehören das Schneiden der Feldfrüchte, etwa Getreide wie Weizen, Roggen, Hafer sowie Mais und Raps, das Trennen von Spreu und Erntegut in Form von Korn sowie das anschließende Häckseln und die anschließende Verteilung des Häckselguts zu den üblichen bekannten Arbeitsschritten beim Einsatz dieser Arbeitsmaschinen.

### ZUSAMMENFASSUNG DER ERFINDUNG

Mit dem Dreschen des Getreides, des Maises und des Raps erfolgt das Ernten. In einem weiteren Arbeitsschritt, üblicherweise mehrere Wochen später, kann gesät werden, um die nächste Ernte vorzubereiten. Das Ernten und das Aussähen stellen daher insgesamt arbeitsaufwändige Vorgänge dar, da jeweils gesondert die gesamte landwirtschaftliche Nutzfläche abgefahren werden muss. Dasselbe gilt für jede Erntemaschine.

Das Dokument MD 593 Z offenbart eine Erntemaschine nach dem Oberbegriff des Anspruchs 1.

Eine Aufgabe der Erfindung ist es daher, eine Erntemaschine, insbesondere einen Mähdrescher, zur Verfügung stellen, der die Arbeitsvorgänge des Erntens und des Aussäens insgesamt schneller erledigen kann.

Es wird daher eine Erntemaschine, insbesondere einen Mähdrescher, zum Schneiden von Feldfrüchten zur Verfügung gestellt, aufweisend: eine Vorrichtung zum Schneiden von Feldfrüchten, insbesondere Getreide wie Weizen, Roggen, Hafer sowie Mais und Raps, und eine Saatgutausbringungsvorrichtung zur Aufnahme von Saatgut, wobei die Saatgutausbringungsvorrichtung und die Vorrichtung zum Schneiden eine Wand gemeinsam haben.

Die erfindungsgemäße Erntemaschine weist eine Vorrichtung auf, um Saatgut mitzuführen, wobei das Saatgut zeitlich direkt nach dem Dreschen gesät werden kann. Hierdurch kann in einem einzigen Arbeitsschritt geerntet und gesät werden. Beispielhafte Ausführungsformen werden in den abhängigen Ansprüchen beschrieben.

Gemäß einem weiteren Ausführungsbeispiel der vorliegenden Erfindung wird eine Erntemaschine zur Verfügung gestellt, wobei die Saatgutausbringungsvorrichtung das Saatgut direkt nach dem Schneiden bzw. nach dem Mähen bzw. vor dem Dreschen bzw. während dem Dreschen ausbringen kann.

Gemäß einem weiteren Ausführungsbeispiel der vorliegenden Erfindung wird eine Erntemaschine zur Verfügung gestellt, wobei die Erntemaschine eine Drillvorrichtung zum gleichmäßigen und weitflächigen Aussäen des Saatguts aufweist.

Durch die Anordnung einer Drillvorrichtung kann das Saatgut vorteilhafterweise weitflächig und gleichmäßig über die abgeerntete landwirtschaftliche Nutzfläche verteilt werden.

Gemäß einem weiteren Ausführungsbeispiel der vorliegenden Erfindung wird eine Erntemaschine zur Verfügung gestellt, wobei die Saatgutausbringungsvorrichtung als doppelwandige Ausbildung hinter dem Schneidwerk angeordnet ist.

Durch die doppelwandige Ausführung kann direkt hinter dem Schneidwerk des Mähdreschers die Saatgutausbringungsvorrichtung angeordnet werden. Hierdurch kann eine kompakte Ausbildung der Saatgutausbringungsvorrichtung erreicht werden. Erfindungsgemäß wird zur Ausformung der Saatgutausbringungsvorrichtung eine Wand des Schneidwerks genutzt, sodass eine Doppelnutzung einer Wand ermöglicht wird.

Gemäß einem weiteren Ausführungsbeispiel der vorliegenden Erfindung wird eine Erntemaschine zur Verfügung gestellt, wobei die Saatgutausbringungsvorrichtung zusätzlich eine Welle bzw. Schnecke umfasst, die das Saatgut über die komplette Breite der Saatgutausbringungsvorrichtung verteilt.

Gemäß einem weiteren Ausführungsbeispiel der vorliegenden Erfindung wird eine Erntemaschine zur Verfügung gestellt, wobei sich die Saatgutausbringungsvorrichtung nach unten trichterförmig verjüngt.

Durch eine trichterförmige Verjüngung kann eine Konzentration des Saatguts auf eine kleine Grundfläche der Saatgutausbringungsvorrichtung erreicht werden, wodurch das gleichmäßige Aussäen erleichtert wird.

Gemäß einem noch weiteren Ausführungsbeispiel der vorliegenden Erfindung wird eine Erntemaschine zur Verfügung gestellt, wobei sich die Saatgutausbringungsvorrichtung nach unten derart verjüngt, dass das Saatgut in die Schnecke geführt wird.

Gemäß einem weiteren Ausführungsbeispiel der vorliegenden Erfindung wird eine Erntemaschine zur Verfügung gestellt, wobei die Erntemaschine eine Vorrichtung zum Beizen von Saatgut aufweist, um das Saatgut vor dem Aussäen durch Beizen vor Schädlingen und Pilzbefall zu schützen.

Da als Saatgut geerntete Feldfrüchte verwendet werden, die kurz zuvor von dem Mähdrescher geerntet wurden, müssen diese geernteten Feldfrüchte auch gebeizt werden, um sie vor Schädlinge und Pilzbefall zu schützen.

Gemäß einem weiteren Ausführungsbeispiel der vorliegenden Erfindung wird eine Erntemaschine zur Verfügung gestellt, wobei die Erntemaschine ein Mähdrescher ist, wobei die Vorrichtung zum Schneiden ein doppeltes Schneidwerk aufweist und/oder wobei die Saatgutausbringungsvorrichtung unterhalb eines Schrägförderers zum Fördern der geschnittenen Feldfrüchte angeordnet ist.

Gemäß einem weiteren Ausführungsbeispiel der vorliegenden Erfindung wird eine Erntemaschine zur Verfügung gestellt, wobei die Erntemaschine ein Feldhäcksler ist und wobei der Feldhäcksler ein doppeltes Schneidwerk aufweist und/oder wobei die Saatgutausbringungsvorrichtung unter einer Vorpresswalze angeordnet ist.

Gemäß einem weiteren Ausführungsbeispiel der vorliegenden Erfindung wird eine Erntemaschine zur Verfügung gestellt, wobei die Erntemaschine ein Mähdrescher ist, wobei die Vorrichtung zum Schneiden ein doppeltes Schneidwerk aufweist und/oder wobei die Saatgutausbringungsvorrichtung unterhalb eines Schrägförderers zum Fördern der geschnittenen Feldfrüchte angeordnet ist oder wobei die Erntemaschine ein Feldhäcksler ist und wobei der Feldhäcksler ein doppeltes Schneidwerk aufweist und/oder wobei die Saatgutausbringungsvorrichtung unter einer Vorpresswalze angeordnet ist.

Gemäß einem weiteren Ausführungsbeispiel der vorliegenden Erfindung wird eine Erntemaschine zur Verfügung gestellt, ferner aufweisend: - eine Vorrichtung zum Schneiden von Feldfrüchten, insbesondere Getreide wie Weizen, Roggen, Hafer sowie Mais und Raps, und - ein Lesegerät zum Scannen von Mutterkorn und/oder Unkraut und/oder Nicht-Feldfrüchten aus den geschnittenen Feldfrüchten und/oder wobei das Lesegerät an einem Förderer, insbesondere Schrägförderer, angeordnet ist, wobei der Schrägförderer die geschnittenen Feldfrüchte fördert und/oder wobei die Erntemaschine eine Vorrichtung zum Aussondern des Mutterkorns und/oder des Unkrauts und/oder Nicht-Feldfrüchten aus den geschnittenen Feldfrüchten aufweist.

Eine Idee der Erfindung ist es, einen Mähdrescher derart zur Verfügung zu stellen, dass das Ernten und das Säen in einem Arbeitsvorgang erfolgen kann. Hierbei wird ein Behälter für das Saatgut an dem betreffenden erfinderischen Mähdrescher vorgesehen, sodass direkt nach dem Dreschen eine Aussaat erfolgen kann. Hierzu kann in einer alternativen Ausführungsform zusätzlich eine Vorrichtung vorgesehen sein, die ein gleichmäßiges Verteilen sicherstellt. Insbesondere kann der Behälter für das Saatgut als doppelwandige Ausbildung hinter dem Schneidwerk des Mähdreschers ausgeformt sein.

Die einzelnen Merkmale können selbstverständlich auch untereinander kombiniert werden, wodurch sich zum Teil auch vorteilhafte Wirkungen einstellen können, die über die Summe der Einzelwirkungen hinausgehen.

### KURZE BESCHREIBUNG DER ZEICHNUNGEN

Weitere Einzelheiten und Vorteile der Erfindung werden anhand der in den Zeichnungen dargestellten Ausführungsbeispiele verdeutlicht. Es zeigen
Fig. 1 einen Mähdrescher 1 mit einem Schneidwerk 38 und einer Saatgutausbringungsvorrichtung 27, wobei das Schneidwerk 38 und die Saatgutausbringungsvorrichtung 27 eine Wand gemeinsam haben;
Fig. 2 den Mähdrescher 1 mit dem doppelwandigen Schneidwerk 38 und 27 und
Fig. 3 eine alternative, nicht erfindungsgemäße Ausführungsform eines Mähdreschers 1 mit einer Saatgutaustragsvorrichtung/ Saatgutausbringungsvorrichtung 27 und einer Drillvorrichtung 28.

### DETAILLIERTE BESCHREIBUNG BEISPIELHAFTER

### AUSFÜHRUNGSFORMEN

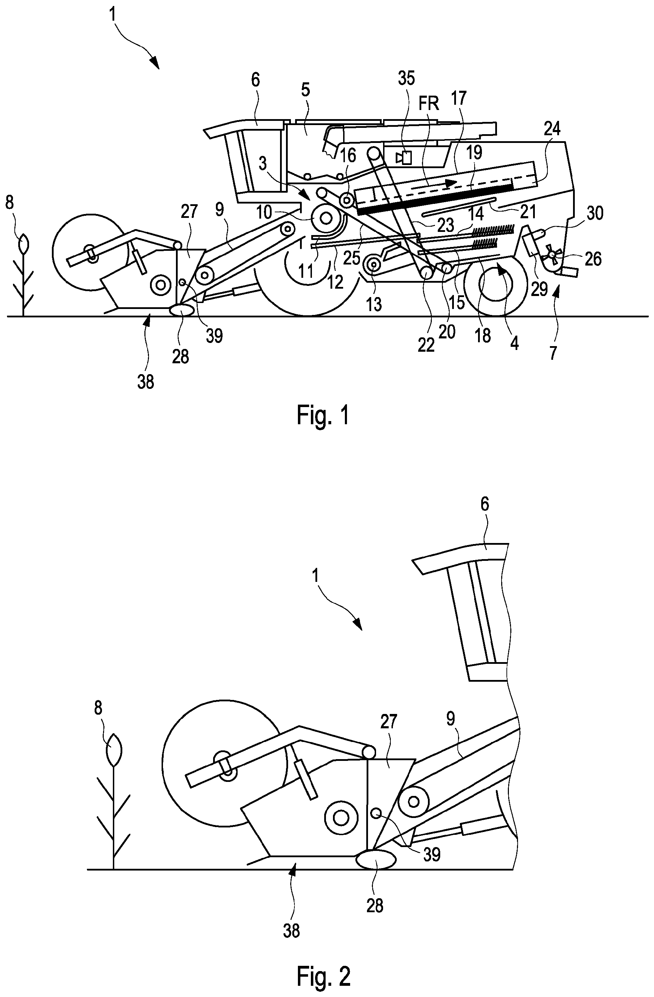

Fig. 1 zeigt einen Mähdrescher 1 mit einem doppelwandigen Schneidwerk. In dem Behälter/der Saatgutausbringungsvorrichtung 27 befindet sich Saatgut zum Aussähen, beispielsweise Raps. Das Saatgut wird vor dem Aussäen gebeizt. Pro Hektar Ackerfläche könnte beispielsweise 1,8 kg Raps ausgesät, sodass der Behälter 27 relativ klein gebaut sein kann. Nachdem das Schneidwerk 38 die Feldfrüchte 8 geschnitten hat, kann daher sofort eine Aussaat erfolgen, wobei hierzu das Saatgut in dem Behälter 27 verwendet wird. Das Saatgut kann den Behälter 27 nach unten verlassen, wobei es durch eine Drillvorrichtung 28 gleichmäßig über die Fläche verteilt werden kann. Der Behälter 27 zur Saatgutausbringung ist doppelwandig hinter dem Schneidwerk 38 des Mähdreschers 1 ausgebildet, das bedeutet, dass das Schneidwerk 38 und der Behälter 27 erfindungsgemäß eine Wand gemeinsam haben.

Der Behälter für das Saatgut kann dadurch kompakt ausgeformt sein.

Fig. 1 zeigt den nach unten sich verjüngenden, trichterförmigen Behälter 27 für das Saatgut. Der Behälter 27 ist direkt hinter dem Schneidwerk 38 angeordnet, sodass das Saatgut direkt nach dem Ernten der Feldfrüchte ausgebracht/gesät werden kann. In dem Behälter 27 ist eine Welle 39, die als Schnecke ausgebildet ist, angeordnet, mit der das Saatgut über die gesamte Arbeitsfläche des Schneidwerks 38 gleichmäßig verteilt werden kann. Außerdem ist eine Drillvorrichtung 28 vorgesehen, die außerdem zu einer gleichmäßigen Verteilung des Saatguts führt.

Fig. 2 zeigt in einer Ausschnittzeichnung den erfinderischen Mähdrescher 1 mit einem Behälter 27, in dem Saatgut gelagert werden kann. Das Saatgut kann direkt nach dem Dreschen auf das abgeerntete Feld ausgebracht werden. Der Mähdrescher 1 weist außerdem eine Drillvorrichtung 28 auf, die ein "Herumschleudern" des Saatguts erzeugt, sodass das Saatgut nicht nur unterhalb des Mähdreschers 1, sondern weitflächig und gleichmäßig verteilt werden kann. Vorteilhafterweise baut durch die Anordnung der Saatgutaustragsvorrichtung 27 direkt hinter dem Schneidwerk 38 der Mähdrescher 1 nicht so hoch und ist insgesamt kompakt ausgeführt. Es ist daher sichergestellt, dass der Fahrer des Mähdreschers 1 in seiner Sicht nicht durch den Behälter 27 behindert wird.

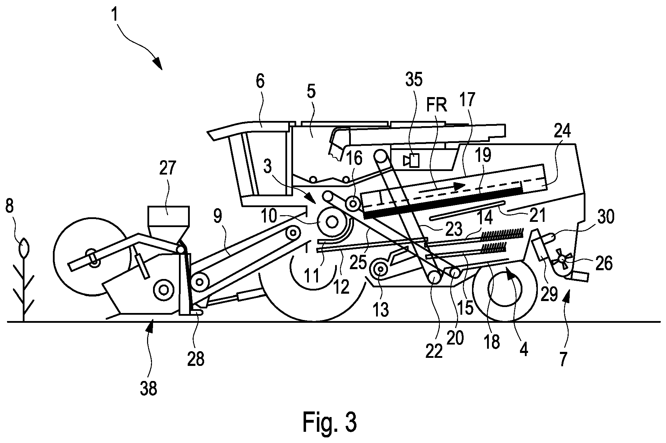

Fig. 3 zeigt eine alternative, nicht erfindungsgemäße Ausführungsform eines Mähdreschers 1 mit einer Saatgutaustragsvorrichtung/ Behälter für Saatgut/ Saatgutausbringungsvorrichtung 27, die direkt über dem Dreschwerk 38 angeordnet ist.

In einer Ausführungsform der Erfindung ist bei einem Mähdrescher hinter dem Schneidwerk unterhalb des Schrägförderers, der die geernteten Feldfrüchte fördert, eine Vorrichtung zum Säen von Saatgut angeordnet. Diese Vorrichtung zum Säen von Saatgut kann dazu genutzt werden, direkt nach dem Schneiden des Erntegutes eine Aussaat vorzunehmen. Hierdurch kann in einem Arbeitsgang sowohl geerntet als auch gesät werden.

In einer weiteren erfinderischen Ausführungsform ist an dem Schrägförderer, der die geschnittenen Feldfrüchte von dem Schneidwerk des Mähdreschers fördert, ein Lesegerät angeordnet, um beispielsweise Mutterkorn, kleine Steine oder sonstige Teilchen zu detektieren, die keine geschnittenen Feldfrüchte sind. Diese Teile, die keine geschnittenen Feldfrüchte sind, können herausgefiltert werden, beispielsweise durch die Verwendung von Druckluft, ein Sieb oder einen Schieber. Insbesondere das Mutterkorn, aber auch die sonstigen herausgefilterten Teile, können in einer Auffangvorrichtung gesammelt werden, um später in geeigneter Weise verwendet zu werden. Die Auffangvorrichtung kann in der Nähe des Lesegeräts bzw. in der Nähe des Schrägförderers angeordnet werden.

Ein Feldhäcksler weist Vorpresswalzen auf. Unterhalb dieser Vorpresswalzen kann eine Vorrichtung zum Aussäen angeordnet werden, um direkt nach dem Ernten der Feldfrüchte in demselben Arbeitsgang ein Aussäen von Saatgut durchführen zu können.

Das Saatgut wird direkt dem Korntank des Mähdreschers, in dem das geerntete Korn bzw. das Getreide gesammelt wird, entnommen und in die Saatgutausbringungsvorrichtung geleitet. Zuvor oder innerhalb der Saatgutausbringungsvorrichtung wird das Saatgut gebeizt, um es vor Schädlingsbefall, insbesondere Insekten und Vögel, und Pilzbefall zu schützen.

Die erfindungsgemäße Erntemaschine kann ein Mähdrescher sein. In diesem Fall kann die Vorrichtung zum Schneiden ein doppeltes Schneidwerk aufweisen und/oder die Saatgutausbringungsvorrichtung kann unterhalb eines Schrägförderers zum Fördern der geschnittenen Feldfrüchte angeordnet sein.

In einer weiteren erfindungsgemäßen Ausführungsform kann die Erntemaschine ein Feldhäcksler sein und der Feldhäcksler kann ein doppeltes Schneidwerk aufweisen und/oder wobei die Saatgutausbringungsvorrichtung kann unter einer Vorpresswalze angeordnet sein.

In einer weiteren Ausführungsform wird das Saatgut mit Mikroelementen und Nährstoffen eingesprüht, um das Wachsen des Saatguts zu unterstützen. Außerdem kann das ausgebrachte Saatgut mit Mulch bedeckt werden, um eine weitere Wachstumsförderung sicherzustellen.

Es sei angemerkt, dass der Begriff "umfassen" weitere Elemente oder Verfahrensschritte nicht ausschließt, ebenso wie der Begriff "ein" und "eine" mehrere Elemente und Schritte nicht ausschließt.

Die verwendeten Bezugszeichen dienen lediglich zur Erhöhung der Verständlichkeit und sollen keinesfalls als einschränkend betrachtet werden, wobei der Schutzbereich der Erfindung durch die Ansprüche wiedergegeben wird.

### LISTE DER BEZUGSZEICHEN

- 1: Mähdrescher
- 3: Dreschorgan
- 4: Reinigungseinrichtung
- 5: Korntank
- 6: Fahrerkabine
- 7: Verteiler
- 8: Erntegut
- 9: Schrägförderorgan
- 10: Dreschtrommel
- 11: Dreschkorb
- 12: Vorbereitungsboden
- 13: Reinigungsgebläse
- 14: Obersieb
- 15: Untersieb
- 16: Wendetrommel
- 17: Axialrotor
- 18: Boden
- 19: Sieb
- 20: Schnecke
- 21: Rücklaufboden
- 22: Schneckeneinrichtung
- 23: Kornelevator
- 25: Überkehrelevator
- 26: Häcksler
- 27: Saatgutaustragsvorrichtung/ Behälter für Saatgut/ Saatgutausbringungsvorrichtung
- 28: Drillvorrichtung zum gleichmäßigen Verteilen des Saatguts
- 30: Düngerausgabeeinrichtung
- 31: Häckselgut
- 32: Saatgut
- 33: Feldfrüchte
- 34: Flüssigdünger
- 35: Kamera
- 36: Korn
- 37: Förderband
- 38: Vorrichtung zum Schneiden/ Dreschwerk/Schneidwerk
- 39: Welle/Schnecke

## Patentansprüche

1. Erntemaschine, insbesondere Mähdrescher (1) zum Schneiden von Feldfrüchten, aufweisend:
- eine Vorrichtung zum Schneiden (38) von Feldfrüchten, insbesondere Getreide wie Weizen, Roggen, Hafer sowie Mais und Raps und
- eine Saatgutausbringungsvorrichtung (27) zur Aufnahme von Saatgut, **dadurch gekennzeichnet, dass** die Saatgutausbringungsvorrichtung (27) und die Vorrichtung zum Schneiden (38) eine Wand gemeinsam haben.

2. Erntemaschine nach Anspruch 1, wobei die Saatgutausbringungsvorrichtung (27) das Saatgut direkt nach dem Schneiden bzw. nach dem Mähen bzw. vor dem Dreschen bzw. während dem Dreschen ausbringen kann.

3. Erntemaschine nach einem der Ansprüche 1 oder 2, wobei die Erntemaschine eine Drillvorrichtung (28) zum gleichmäßigen und weitflächigen Aussäen des Saatguts aufweist.

4. Erntemaschine nach einem der vorhergehenden Ansprüche, wobei die Saatgutausbringungsvorrichtung (27) als doppelwandige Ausbildung hinter dem Schneidwerk (38) angeordnet ist.

5. Erntemaschine nach einem der vorhergehenden Ansprüche, wobei die Saatgutausbringungsvorrichtung (27) zusätzlich eine Welle bzw. Schnecke (39) umfasst, die das Saatgut über die komplette Breite der Saatgutausbringungsvorrichtung (27) verteilt.

6. Erntemaschine nach einem der vorhergehenden Ansprüche, wobei sich die Saatgutausbringungsvorrichtung (27) nach unten trichterförmig verjüngt.

7. Erntemaschine nach einem der Ansprüche 5 oder 6, wobei sich die Saatgutausbringungsvorrichtung nach unten derart verjüngt, dass das Saatgut in die Schnecke (39) geführt wird.

8. Erntemaschine nach einem der vorhergehenden Ansprüche, wobei die Erntemaschine eine Vorrichtung zum Beizen von Saatgut aufweist, um das Saatgut vor dem Aussäen durch Beizen vor Schädlingen und Pilzbefall zu schützen.

9. Erntemaschine nach einem der vorhergehenden Ansprüche, wobei die Erntemaschine ein Mähdrescher ist, wobei die Vorrichtung zum Schneiden (38) ein doppeltes Schneidwerk aufweist und/oder wobei die Saatgutausbringungsvorrichtung (27) unterhalb eines Schrägförderers (9) zum Fördern der geschnittenen Feldfrüchte angeordnet ist oder wobei die Erntemaschine ein Feldhäcksler ist und wobei der Feldhäcksler ein doppeltes Schneidwerk aufweist und/oder wobei die Saatgutausbringungsvorrichtung unter einer Vorpresswalze angeordnet ist.

10. Erntemaschine nach einem der vorhergehenden Ansprüche ferner aufweisend: - eine Vorrichtung zum Schneiden (38) von Feldfrüchten, insbesondere Getreide wie Weizen, Roggen, Hafer sowie Mais und Raps, und - ein Lesegerät (35) zum Scannen von Mutterkorn und/oder Unkraut und/oder Nicht-Feldfrüchten aus den geschnittenen Feldfrüchten und/oder wobei das Lesegerät (35) an einem Förderer, insbesondere Schrägförderer (9, 23, 37), angeordnet ist, wobei der Schrägförderer (9, 23, 37) die geschnittenen Feldfrüchte fördert und/oder wobei die Erntemaschine eine Vorrichtung zum Aussondern des Mutterkorns und/oder des Unkrauts und/oder Nicht-Feldfrüchten aus den geschnittenen Feldfrüchten aufweist.

## Claims

1. A Harvesting machine, in particular a combine harvester (1) for cutting crops, comprising:
- a device for cutting (38) crops, in particular grains such as wheat, rye, oats, as well as corn and rapeseed, and
- a seed-dispensing device (27) configured to receive seed, **characterized in that** the seed dispensing device (27) and the cutting device (38) share a common wall.

2. The harvesting machine according to claim 1, wherein the seed-dispensing device (27) can dispense the seed immediately after cutting or after mowing, or before threshing or during threshing.

3. The harvesting machine according to any one of claims 1 or 2, wherein the harvesting machine comprises a drilling device (28) for uniform and wide-area seeding of the seed.

4. The harvesting machine according to any of the preceding claims, wherein the seed-dispensing device (27) is arranged as a double-walled structure behind the cutting unit (38).

5. The harvesting machine according to any of the preceding claims, wherein the seed-dispensing device (27) additionally comprises a shaft or auger (39) that distributes the seed across the entire width of the seed-spreading device (27).

6. The harvesting machine according to any of the preceding claims, wherein the seed-dispensing device (27) tapers downward in a funnel shape.

7. The harvesting machine according to any one of claims 5 or 6, wherein the seed dispensing device tapers downward such that the seed is fed into the auger (39).

8. The harvesting machine according to any one of the preceding claims, wherein the harvesting machine comprises a device for treating seeds to protect them from pests and fungal infestation by treating them prior to sowing.

9. The harvesting machine according to one of the preceding claims, wherein the harvesting machine is a combine harvester, wherein the cutting device (38) comprises a double cutting mechanism, and/or wherein the seed-spreading device (27) is arranged below an inclined conveyor (9) for conveying the cut crops, or wherein the harvesting machine is a forage harvester and wherein the forage harvester comprises a double cutting mechanism and/or wherein the seed-dispensing device is arranged below a pre-compression roller.

10. The harvesting machine according to one of the preceding claims, further comprising: -a device (38) for cutting crops, in particular grains such as wheat, rye, oats, as well as corn and rapeseed, and- a scanning device (35) configured to scan the cut crops for ergot and/or weeds and/or non-crop material and/or wherein the sorting device (35) is mounted on a conveyor, in particular an inclined conveyor (9, 23, 37), wherein the inclined conveyor (9, 23, 37) conveys the cut crops and/or wherein the harvester includes a device for separating the seed grain and/or weeds and/or non-crops from the cut crops.

## Revendications

1. Machine de récolte, en particulier moissonneuse-batteuse (1) destinée à la coupe des cultures, comprenant:
- un dispositif de coupe (38) des cultures, en particulier des céréales telles que le blé, le seigle, l'avoine, ainsi que le maïs et le colza, et
- un dispositif de distribution de semences (27) destiné à contenir des semences, **caractérisée en ce que** le dispositif de distribution de semences (27) et le dispositif de coupe (38) partagent une paroi commune.

2. Machine de récolte selon la revendication 1, dans laquelle le dispositif de distribution de semences (27) peut distribuer les semences immédiatement après la coupe ou après le fauchage, ou avant le battage ou pendant le battage.

3. Machine de récolte selon l'une quelconque des revendications 1 ou 2, dans laquelle la machine de récolte comprend un dispositif d'ensemencement (28) destiné à un ensemencement uniforme et à grande échelle des graines.

4. Machine de récolte selon l'une quelconque des revendications précédentes, dans laquelle le dispositif de distribution de graines (27) est agencé sous la forme d'une structure à double paroi derrière l'unité de coupe (38).

5. Machine de récolte selon l'une quelconque des revendications précédentes, dans laquelle le dispositif d'épandage de semences (27) comprend en outre un arbre ou une vis sans fin (39) qui répartit les semences sur toute la largeur du dispositif d'épandage de semences (27).

6. Machine de récolte selon l'une quelconque des revendications précédentes, dans laquelle le dispositif de distribution de semences (27) se rétrécit vers le bas en formant un entonnoir.

7. Machine de récolte selon l'une quelconque des revendications 5 ou 6, dans laquelle le dispositif de distribution de semences se rétrécit vers le bas de telle sorte que les semences soient acheminées vers la vis sans fin (39).

8. Une machine de récolte selon l'une quelconque des revendications précédentes, **caractérisée en ce qu'**elle comprend un dispositif destiné à traiter les graines afin de les protéger contre les ravageurs et les infestations fongiques en les traitant avant le semis.

9. Machine de récolte selon l'une des revendications précédentes, dans laquelle la machine de récolte est une moissonneuse-batteuse, dans laquelle le dispositif de coupe (38) comprend un mécanisme de coupe double, et/ou dans laquelle le dispositif d'épandage de semences (27) est disposé en dessous d'un convoyeur incliné (9) destiné à acheminer les récoltes coupées, ou dans laquelle la moissonneuse est une ensileuse et dans laquelle l'ensileuse comprend un double mécanisme de coupe et/ou dans laquelle le dispositif de distribution de semences est disposé sous un rouleau de précompression.

10. Machine de récolte selon l'une des revendications précédentes, comprenant en outre : - un dispositif (38) destiné à couper les cultures, en particulier les céréales telles que le blé, le seigle, l'avoine, ainsi que le maïs et le colza, et - un dispositif de lecture ou de détection (35) destiné à scanner les récoltes coupées afin de détecter l'ergot et/ou les mauvaises herbes et/ou des éléments autres que les cultures et/ou les éléments non cultivés des cultures coupées, et/ou dans laquelle le dispositif de tri (35) est monté sur un convoyeur, en particulier un convoyeur incliné (9, 23, 37), ledit convoyeur incliné (9, 23, 37) acheminant les cultures coupées et/ou dans laquelle la moissonneuse comporte un dispositif destiné à séparer les graines et/ou les mauvaises herbes et/ou les éléments non cultivés des cultures coupées.
